# EUROPEAN PATENT APPLICATION

(11) **EP 2 096 789 A1**
(43) Date of publication of application: **02.09.2009**
(21) Application number: 07720927.8
(22) Date of filing: 24.04.2007
(51) Int. Cl.: H04L 12/16, H04M 1/64, H04Q 7/32

(54) **METHOD AND NETWORK FOR IMPLEMENTING COMPUTER VOICE COMMUNICATION BASED ON WIRELESS COMMUNICATION TERMINAL**

(30) Priority: 28.11.2006 CN 200610160801
(71) Applicant: ZTE Corporation, Shenzhen city, Guangdong 518057 (CN)
(72) Inventor: HUANG, Lugang, Shenzhen City Guangdong 518057 (CN); HE, Yanguo, Shenzhen City Guangdong 518057 (CN)
(74) Representative: Bergmeier, Werner
(86) International application number: PCT/CN2007/001354
(87) International publication number: WO 2008/064541

(57) **Abstract**

A method and network for implementing computer voice communication based on wireless communication terminal is provided. The method comprises: configuring the network before carrying out the voice communication, establishing connection between a computer and a wireless communication terminal via an interface, configuring the same coding and decoding protocols for voice signals between them, establishing voice communication connection between the computer and a communication device at an opposite end, and the computer and the wireless communication terminal sending and receiving voice signals between them via the interface. The network comprises a computer, a wireless communication terminal, a wireless communication network and a communication device at an opposite end.

## Description

### Technical Field

The present invention relates to wireless communication technology, and more particularly to a method and network for implementing computer voice communication based on a wireless communication terminal.

### Technical Background

The increasing popularization of wireless communication systems and terminals and computers provides a wide space for implementing integration application of mobile communication technology and computer technology. Controlling voice communication by a computer is of great practical application significance and greater potential application significance, especially in the field of 3G network technology. The computer can conveniently realize functions such as voice recording, voice automatic response, voice encryption and the like by controlling voice communication, and can implement the interconnection and intercommunication between different voice communication systems by using the computer as a platform.

In voice communication for a communication terminal, a common method is that the computer performs operations such as dialing, on-hook and the like on mobile communication using attention commands through a serial port between the computer and a mobile terminal or other interfaces. A receiver channel of the mobile terminal uses one digital analog conversion (D/A) circuit controlled by the computer as an input, and a transmitter channel of the mobile terminal is output to one analog digital conversion (A/D) circuit controlled by the computer to transmit voice signals to the compute. Thus the computer realizes the control for voice communication of a wireless communication terminal. There are many kinds of interface signals of such form, and the interface is complex and does not have high generality.

As an interface between the wireless communication terminal and the computer develops from a single serial port to various interfaces with higher speed, such as USB, PCMCIA, PCI express, blue tooth, etc., it becomes possible that the computer controls the call for the wireless communication terminal and implements real-time transmission of voice signals by these interfaces, while using attention commands.

Therefore, there is need for a method for implementing computer voice communication based on wireless communication terminal. The method includes transmitting the coded voice signals using a communication interface with high communication rate between the computer and the wireless communication terminal, and carrying out voice communication with communication terminals such as mobile phone, wire phone and the like by a wireless communication network.

### Summary of the Invention

A technical problem solved by the present invention is to provide a method and network for implementing computer voice communication based on wireless communication terminal, so that the wireless communication terminal transmits and receives voice signals on a computer and carries out voice communication with a communication device at an opposite end.

The present invention provides a method for implementing computer voice communication based on wireless communication terminal, the method comprises:
configuring the network before carrying out the voice communication, establishing connection between a computer and a wireless communication terminal via an interface, configuring the same coding and decoding protocols for voice signals between them, and establishing voice communication connection between the computer and a communication device at an opposite end.

The process of the computer sending the voice signals to the communication device at the opposite end is as follow:
(11) the computer coding the voice signals and then transmitting the voice signals to the wireless communication terminal via the interface; and
(12) the wireless communication terminal decoding the received voice signals, then modulating the voice signals into radio frequency signals and transmitting them to the communication device at the opposite end.

The process of the computer receiving the voice signals sent by the communication device at the opposite end is as follows:
(21) the wireless communication terminal receiving the radio frequency signals sent by the communication device at the opposite end, demodulating the voice signals therein, and coding the voice signals and then transmitting them to the computer; and
(22) the computer decoding the received voice signals and then obtaining the voice signals from the communication device at the opposite end.

Further, the processes of the computer sending and receiving the voice signals are carried out parallelly.

Further, the processes of the wireless communication terminal and the computer coding and decoding the voice signals are accomplished according to the same coding and decoding protocols, or coding conversion is performed for the voice signals by employing a special software when the coding protocol and decoding protocol are different.

Further, in the step (12) and the step (21), the wireless communication terminal sends and receives the voice signals by a wireless network.

Further, the interface between the computer and the wireless communication terminal is a wireless interface or a wired interface.

Further, the interface between the computer and the wireless communication terminal is USB, PCMCIA, PCI express or blue tooth interface.

Further, the way for establishing voice communication connection between the computer and the communication device at the opposite end comprises:
the computer controlling the wireless communication terminal to initiate a call, and establishing the voice communication connection between two sides after the communication device at the opposite end responds; or
the wireless communication terminal initiating a call directly, and establishing voice the communication connection between two sides after the communication device at the opposite end responds; or
the communication device at the opposite end initiating a call, and establishing the voice communication connection between two sides by the wireless communication terminal answering and responding after the wireless communication terminal receives the call; or
the communication device at the opposite end initiating a call, and establishing the voice communication connection between two sides by the computer software answering and responding after the wireless communication terminal receives the call.

Further, in the step (11), the voice signals come from audio files in the computer, an audio receiving call device or other voice processing software.

Further, when it is needed to encrypt voice communication, in the step (11) or the step (21), encryption operation is performed according to promissory algorithm in coding, and in the step (12) or the step (22), decryption operation is performed according to the promissory algorithm in decoding.

Further, the step (22) includes the computer storing the voice signals in voice file format, or sending the voice signals to an audio transmitting call system of the computer to be played, or sending the voice signals to the voice processing software in the computer to be processed after the computer receives the voice signals from the communication device at the opposite end.

Further, in the step (11) or the step (21), when the interface between the computer and the wireless communication terminal transmits the voice signals, the voice signals are processed as simple digital signals.

The present invention also provides a network for implementing computer voice communication based on wireless communication terminal. The network comprises a computer, a wireless communication terminal, a wireless communication network and a communication device at an opposite end, the computer is connected to the wireless communication terminal via an interface, and the wireless communication terminal establishes call connection with the communication device at the opposite end through the wireless communication network, and wherein
the computer is used for sending the coded voice signals to the wireless communication terminal and receiving the voice signals sent by the wireless communication terminal;
the wireless communication terminal is used for receiving the coded voice signals sent by the computer, decoding the voice signals and then modulating them into radio frequency signals, and sending them to the communication device at the opposite end by the wireless communication network; and
the communication device at the opposite end is used for receiving the radio frequency signals sent by the wireless communication terminal and sending radio frequency signals to the wireless communication terminal.

Further, the interface between the computer and the wireless communication terminal is a wireless interface or a wired interface.

Further, the interface between the computer and the wireless communication terminal is USB, PCMCIA, PCI express or blue tooth interface.

Further, the processes of the wireless communication terminal and the computer coding and decoding the voice signals are all accomplished according to the same coding and decoding protocols, or the coding conversion is performed for the voice signals by employing a special software when the coding protocol and decoding protocol are different.

The method according to the present invention implements a simple digital interface between the computer and the wireless communication terminal, the form of the interface is concise and single, and the extension of various functions can be achieved by a software mode, thereby facilitating large scale popularization and application. Compared with modes such as IP voice communication in simple digital form, the communication mode according to the present invention has little dependence on network system and device and good real-time performance because voice channel is passed by at network side. In addition, the present invention implements the integration of the computer and voice communication function in the wireless communication terminal and implements more applications using strong software functions of the computer. The computer can implement automatic response by running software thereon, transmit various forms of voice files using a receiver and a transmitter thereon, and convert voice into voice files to record them, or encrypt and decrypt the voice signals conveniently.

### Brief Description of the Drawings

- **Fig. 1**: is a network structure diagram required for implementing computer voice communication based on wireless communication terminal;
- **Fig. 2**: is a flowchart of a computer sending voice signals in a specific embodiment according to the present invention; and
- **Fig. 3**: is a flowchart of a computer receiving voice signals in a specific embodiment according to the present invention.

### Preferred Embodiments of the Invention

The technology scheme of the present invention will be described in detail below in conjunction with the accompany drawings and embodiments.

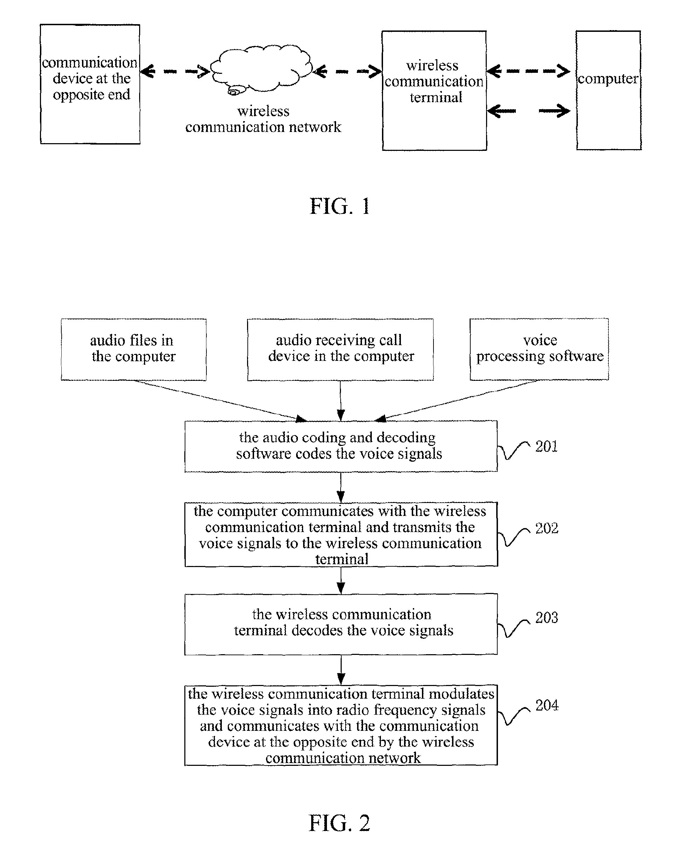

As shown in FIG. 1, a network structure diagram required for the method for implementing computer voice communication according to the present invention is illustrated. The network comprises a computer, a wireless communication terminal, a wireless communication network and a communication device at an opposite end, wherein the computer is connected to the wireless communication terminal via an interface which is a wired or wireless interface. The wireless communication terminal then establishes call connection with the communication device at the opposite end through the wireless communication network so as to establish call connection between the computer and the communication device at the opposite end.

In an embodiment of the present invention, the wireless communication terminal refers to devices or components with wireless communication function, such as mobile phone, wireless data card, wireless communication module and the like.

In order to implement the technology scheme, firstly, the following configuration is needed to be made:
(1) in hardware connection, the interface between the computer and the wireless communication terminal may be USB, PCMCIA, PCI express or blue tooth interface or other possible interface forms. The computer establishes connection with the wireless communication terminal via the interface.

Furthermore, the computer is used for sending the coded voice signals to the wireless communication terminal and receiving the voice signals sent by the wireless communication terminal.

The wireless communication terminal is used for receiving the coded voice signals sent by the computer, decoding the voice signals and then modulating them into radio frequency signals, and sending them to the communication device at the opposite end by the wireless communication network.

The communication device at the opposite end is used for receiving the radio frequency signals sent by the wireless communication terminal and sending radio frequency signals to the wireless communication terminal.
(2) in software processing, it is required that the coding and decoding ways for the voice signals in software at the computer is consistent with the ones in software at the wireless communication terminal, that is, coding and decoding operations on the voice signals are performed according to the same coding and decoding protocols, so that voice data stream can be connected directly. If the coding and decoding protocols for both the computer and the wireless communication terminal are different, then a special software is needed to perform coding conversion for the voice signals of various coding ways.

Based on the software and hardware configuration described above, the voice signals at the computer can be sent to the communication device at the opposite end by the wireless communication terminal, the voice signals sent by the communication device at the opposite end can be played and stored in the computer, and a user can execute functions such as phone recording or automatic voice response by the computer.

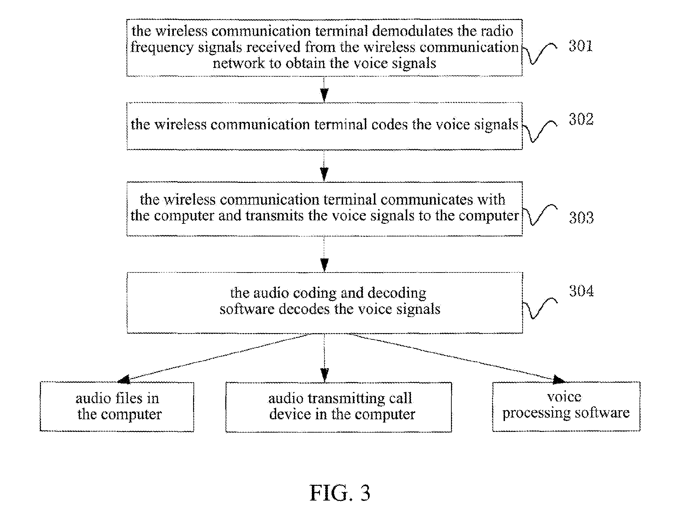

In the method according to the present invention, the processing for real-time voice signals is divided into two processes: a process of sending the voice signals and a process of receiving the voice signals, see FIG. 2 and FIG. 3 respectively. Both the processes are performed on the basis that voice communication has been established between the computer and the communication device at the opposite end. First, the wireless communication terminal needs to establish voice communication connection with the communication device at the opposite end. By the computer controlling the wireless communication terminal to initiate a call through attention commands, or by the wireless communication terminal initiating a call directly, the voice communication connection can be established after the communication device at the opposite end responds. Alternatively, the communication device at the opposite end can also initiate a call, and after the wireless communication terminal receives the call, the wireless communication terminal or computer software answer and respond, thus the voice communication connection is established. The processes of sending and receiving the voice signals share an interface channel between the computer and the wireless communication terminal and are performed parallelly in time.

The processes of sending and receiving the voice signals are described in detail below respectively.

See FIG. 2, the process of the computer sending the voice signals comprises the following step:

step 201: the computer codes the voice signals thereon according to the coding protocol and decoding protocol agreed by the computer and the wireless communication terminal, such as according to PCM format. The voice signals come from audio files in the computer, an audio receiving call device (for example, a microphone) or other voice processing software. Voice of the local user can be transmitted to the communication device at the opposite end by the microphone in the computer.

If direct voice communication is needed, the user can input voice real-timely directly using the microphone in the computer. If voice signals in existing audio files needs to be transmitted to the other party, voice of the audio files can be converted according to file format type using a software associated with the coding and decoding in communication process, and voice coding can be performed according to the coding protocol and decoding protocol agreed by the computer and the wireless communication terminal. If voice information needs to be encrypted, encryption operation can be performed in coding stage, accordingly, the communication device at the opposite end needs to encrypt to realize correct communication. The associated coding software and decoding software thereof can be connected to other voice processing software so as to realize connection with more applications or other voice communication systems.

step 202: the computer transmits the coded voice signals to the wireless communication terminal via the interface between the computer and the wireless communication terminal, wherein for the software in interface communication portion, these voice signals are processed as simple digital signals, and real-time performance of voice communication should be fully considered in communication processing;

step 203: the wireless communication terminal decodes the coded voice signals received according to the coding protocol and decoding protocol agreed by the computer and the wireless communication terminal;

step 204: the wireless communication terminal modulates the decoded voice signals into radio frequency signals and transmits them to the communication device at the opposite end by the wireless communication network. In specific implementation process, depending on different systems, for example, wireless communication networks such as GSM, CDMA, WCDMA and the like, the corresponding modulation is made according to requirements for different systems.

See FIG. 3, the process of the computer receiving the voice signals comprises the following specific steps:

step 301: the wireless communication terminal receives the radio frequency signals from the communication device at the opposite end through the wireless communication network, and demodulates the voice signals from the radio frequency signals to obtain the voice signals from the communication device at the opposite end, wherein for different systems of communication networks (for example, GSM, CDMA, WCDMA and the like), the specific demodulation depends on the specific system;

step 302: the wireless communication terminal codes the received voice signals, wherein the demodulated voice signals obtained are coded according to the coding protocol and decoding protocol agreed by the computer and the wireless communication terminal;

step 303: the wireless communication terminal communicates with the computer and transmits the voice signals to the computer.

Likewise, for the software in interface communication portion, these voice signals are processed as simple digital signals, and real-time performance of voice communication should be fully considered in communication processing, which is the same as in the process of sending the voice signals.

step 304: the coding software and decoding software of the computer decode the received voice signals according to the coding protocol and decoding protocol agreed by the computer and the wireless communication terminal. The corresponding processing is performed for various specific applications.

If the computer carries out direct voice communication with the communication device at the opposite end, then the computer sends directly the decoded voice signals to the transmitting call device of the computer, such as speaker or earphone. Thus the local user can hear voice from the communication device at the opposite end.

If the received the voice needs to be stored, then the computer can convert the voice signals into the corresponding voice coding formats and store them in file or database format.

If the computer carries out encrypted voice communication with the communication device at the opposite end, then voice information can be decrypted in this stage, and played or stored after being converted into normal voice signals.

In addition, the coding and decoding software can be connected to other voice processing software to realize connection with more applications or other voice communication systems, that is, the voice signals can be transmitted to voice processing software to be processed, so that the voice signals can be transmitted to other applications or other voice communication systems.

### Industrial Applicability

The technology scheme according to the present invention implements voice data communication between the communication device at the opposite end and the computer. Specifically speaking, the computer is connected to a wireless communication module or a mobile phone via interfaces such as USB, PCMCIA, PCI express, blue tooth, etc., achieves voice coding and decoding and call controlling by the software in the computer, and implements transmission of voice signals by an interface channel between the computer and the wireless communication terminal. The wireless communication terminal then communicates with communication terminals such as mobile phone, wired phone and the like by the wireless communication network.

## Claims

1. A method for implementing computer voice communication based on a wireless communication terminal, comprising:
configuring a network before carrying out the voice communication, establishing a connection between a computer and the wireless communication terminal via an interface, configuring the same coding and decoding protocols for voice signals between the computer and the wireless communication terminal, and establishing a voice communication connection between the computer and a communication device at an opposite end;
the process of the computer sending the voice signals to the communication device at the opposite end is as follows:
(11) the computer coding the voice signals and then transmitting the voice signals to the wireless communication terminal via the interface; and
(12) the wireless communication terminal decoding the received voice signals, then modulating the voice signals into radio frequency signals and transmitting the signals to the communication device at the opposite end;
the process of the computer receiving the voice signals sent by the communication device at the opposite end is as follows:
(21) the wireless communication terminal receiving the radio frequency signals sent by the communication device at the opposite end, demodulating the voice signals therein, and coding the voice signals and then transmitting the signals to the computer; and
(22) the computer decoding the received voice signals and then obtaining the voice signals from the communication device at the opposite end.

2. The method according to claim 1, wherein the processes of the computer sending and receiving the voice signals are carried out parallelly.

3. The method according to claim 1, wherein the processes of the wireless communication terminal and the computer coding and decoding the voice signals are all accomplished according to the same coding and decoding protocols, or coding conversion is performed for the voice signals by employing a special software when the coding protocol and decoding protocol are different.

4. The method according to claim 1, wherein in the step (12) and the step (21), the wireless communication terminal sends and receives the voice signals by a wireless network.

5. The method according to claim 1, wherein the interface between the computer and the wireless communication terminal is a wireless interface or a wired interface.

6. The method according to claim 5, wherein the interface between the computer and the wireless communication terminal is USB, PCMCIA, PCI express or blue tooth interface.

7. The method according to claim 1, wherein the way for establishing the voice communication connection between the computer and the communication device at the opposite end comprises:
the computer controlling the wireless communication terminal to initiate a call, and establishing the voice communication connection between two sides after the communication device at the opposite end responds; or
the wireless communication terminal initiating a call directly, and establishing the voice communication connection between the two sides after the communication device at the opposite end responds; or
the communication device at the opposite end initiating a call, and establishing the voice communication connection between the two sides by the wireless communication terminal answering and responding after the wireless communication terminal receives the call; or
the communication device at the opposite end initiating a call, and establishing the voice communication connection between the sides by the computer software answering and responding after the wireless communication terminal receives the call.

8. The method according to claim 1, wherein in the step (11), the voice signals come from audio files in the computer, an audio receiving call device or other voice processing softwares.

9. The method according to claim 1, wherein when it is needed to encrypt the voice communication, in the step (11) or the step (21) encryption operation is performed according to a promissory algorithm in coding, and in the step (12) or the step (22) decryption operation is performed according to the promissory algorithm in decoding.

10. The method according to claim 1, wherein the step (22) further includes the computer storing the voice signals in voice file format, or sending the voice signals to an audio transmitting call system of the computer to be played, or sending the voice signals to the voice processing software in the computer to be processed after the computer receives the voice signals from the communication device at the opposite end.

11. The method according to claim 1, wherein in the step (11) or the step (21), when the interface between the computer and the wireless communication terminal transmits the voice signals, the voice signals are processed as simple digital signals.

12. A network for implementing computer voice communication based on a wireless communication terminal, wherein the network comprises a computer, a wireless communication terminal, a wireless communication network and a communication device at an opposite end, the computer is connected to the wireless communication terminal via an interface, and the wireless communication terminal establishes a call connection with the communication device at the opposite end through the wireless communication network, and wherein
the computer is used for sending coded voice signals to the wireless communication terminal and receiving the voice signals sent by the wireless communication terminal;
the wireless communication terminal is used for receiving the coded voice signals sent by the computer, decoding the voice signals and then modulating the voice signals into radio frequency signals, and sending the signals to the communication device at the opposite end by the wireless communication network; and
the communication device at the opposite end is used for receiving the radio frequency signals sent by the wireless communication terminal and sending radio frequency signals to the wireless communication terminal.

13. The network according to claim 12, wherein the interface between the computer and the wireless communication terminal is a wireless interface or a wired interface.

14. The network according to claim 13, wherein the interface between the computer and the wireless communication terminal is USB, PCMCIA, PCI express or blue tooth interface.

15. The network according to claim 12, wherein the processes of the wireless communication terminal and the computer coding and decoding the voice signals are all accomplished according to the same coding and decoding protocols, or coding conversion is performed for the voice signals by employing a special software when the coding protocol and decoding protocol are different.
